# EUROPEAN PATENT SPECIFICATION

(11) **EP 3 713 656 B1**
(45) Date of publication and mention of the grant of the patent: **21.07.2021**
(21) Application number: 17801453.6
(22) Date of filing: 21.11.2017
(51) Int. Cl.: B01D 53/50, B01D 53/92, F01N 13/00, F01N 3/02, B01D 47/06

(54) **A METHOD OF INSTALLING AN EXHAUST GAS SCRUBBER SYSTEM OF A POWER PLANT IN A MARINE VESSEL AND AN EXHAUST GAS SCRUBBER SYSTEM FOR WET SCRUBBING OF EXHAUST GAS OF A POWER PLANT IN A MARINE VESSEL**
VERFAHREN ZUM INSTALLIEREN EINES ABGASREINIGUNGSSYSTEMS EINER KRAFTWERKSANLAGE IN EINEM WASSERFAHRZEUG UND ABGASREINIGUNGSSYSTEM ZUR NASSWÄSCHE VON ABGAS EINER KRAFTWERKSANLAGE IN EINEM WASSERFAHRZEUG
PROCÉDÉ D'INSTALLATION D'UN SYSTÈME ÉPURATEUR DE GAZ D'ÉCHAPPEMENT D'UNE CENTRALE ÉLECTRIQUE DANS UN NAVIRE MARIN ET SYSTÈME ÉPURATEUR DE GAZ D'ÉCHAPPEMENT POUR ÉPURATION PAR VOIE HUMIDE DE GAZ D'ÉCHAPPEMENT D'UNE CENTRALE ÉLECTRIQUE DANS UN NAVIRE MARIN

(43) Date of publication of application: 30.09.2020
(73) Proprietor: Wärtsilä Finland Oy, 65100 Vaasa (FI)
(72) Inventor: HÄKKINEN, Esa, 00530 Helsinki (FI); KARANEN, Peter, 00530 Helsinki (FI)
(74) Representative: Genip Oy
(86) International application number: PCT/EP2017/079841
(87) International publication number: WO 2019/101286

(56) References cited:
- EP-A1- 2 955 345
- EP-A1- 3 085 911
- WO-A1-2012/117233
- DE-A1-102009 006 198
- US-A- 5 732 644

## Description

### Technical field

The present invention relates to exhaust gas scrubber system for wet scrubbing of exhaust gas of a power plant in a marine vessel. Invention relates also to a method of installing an exhaust gas scrubber system of a power plant in a marine vessel.

### Background art

Environmental awareness relating to marine transportation has led to an increased need to minimize the emissions to the environment in a marine vessels. Scrubber vessels for scrubbing exhaust gas from internal combustion piston engines operating as the power plants have been used on marine vessels to some extent for reducing the exhaust gas emission to the atmosphere. Exhaust gas is led into the scrubber vessel in which a scrubbing medium, such as an alkaline washing solution, is sprayed into the exhaust gas, whereby the alkaline components react with acidic components of the exhaust gas. The scrubbing medium is sometimes supplied from a so-called buffer tank. The scrubbing medium absorbs SO2, heat and other components from the exhaust gas flow. Before the scrubbed exhaust gas is discharged to the atmosphere, it may be led through a droplet separator arranged before the stack of the vessel. Due to e.g. stricter environmental regulations so called two-stage or multi-stage scrubber vessels have been developed. In such scrubber vessels, scrubbing medium is sprayed into the exhaust gas flow at two or several stages.

As example of such scrubber vessel it is referred to publication WO 2012/113977 A1 which discloses a scrubber system for treating exhaust gas in a marine vessel with a water based solution, the scrubber system comprising a first scrubber vessel and a second scrubber vessel, an exhaust gas inlet in the first scrubber vessel and an exhaust gas outlet in the second scrubber vessel and a second conduit section connecting the first scrubber vessel to the second scrubber vessel, a first scrubbing medium circuit and a second scrubbing medium circuit. The first scrubber medium circuit is provided with a source of scrubbing solution comprising a first connection to outside of the hull beneath the water line of the vessel and the second scrubber medium circuit is provided with a source of scrubbing solution comprising a source of fresh water in the vessel.

WO 2012/117233 A1 discloses an apparatus and a process for scrubbing exhaust gases from a marine engine comprising a scrubber vessel module and a scrubbing liquid processing module. There is disclosed a support framework for supporting the scrubber vessel module. WO 2012/117233 A1 discloses that the scrubbing liquid processing module can be installed at lower deck of the vessel, below the scrubber vessel module. Respectively, the scrubber vessel module is above the scrubbing liquid processing module.

EP 3 085 911 A1 discloses an in-line dual water scrubber for gas cleaning onboard a vessel and comprising a vertical extended body in which several scrubber stages are arranged. In process-wise, concerning the scrubbing liquid part, the scrubber body is in connection with two separate liquid handling systems which allows for two separate liquids to be used.

US 5 732 644 A discloses a device for the exhaust and ventilation systems on a ship which has a plurality of exhaust and ventilation ducts to connect the shipboard operating systems to the environment and is provided with retaining elements for the three-dimensional fastening of the exhaust and ventilation ducts

DE 10 2009 006198 A1 discloses device for large-scale conditioning, in particular cleaning, humidification, drying, cooling, heating and / or pressure increase of liquid and / or gaseous media, which has at least one conditioning device and a container which forms the housing of the device and a flow channel for the medium.

Currently when the environmental regulations will be applied also to the existing marine vessels there is a need for a scrubber system which can be installed to an existing vessel so that the interruption to the vessels transportation service, as well as space consumption is minimized.

### Disclosure of the Invention

Objects of the invention can be met substantially as is disclosed in the independent claims and in the other claims describing more details of different embodiments of the invention.

According to an embodiment of the invention an exhaust gas scrubber system for wet scrubbing of exhaust gas of a power plant in a marine vessel comprises a scrubbing liquid processing module configured to receive scrubbing liquid from a scrubber vessel and to feed scrubbing liquid to the scrubber vessel, a scrubber vessel module comprising the scrubber vessel, configured to subject the exhaust gas to direct contact with a scrubbing liquid in the scrubber vessel, wherein the scrubber vessel module is arranged onto the scrubbing liquid processing module. The scrubber vessel module comprises at least one exhaust gas inlet, at least one exhaust gas outlet, at least one clean scrubbing liquid inlet, at least one used scrubbing liquid outlet, and being fluidly connected to a scrubber vessel. The scrubbing liquid processing module comprises at least one clean scrubbing liquid outlet, at least one used scrubbing liquid inlet, at least one used scrubbing liquid outlet, at least one clean scrubbing liquid inlet, and scrubbing liquid processing equipment. The at least one clean scrubbing liquid inlet of the scrubber vessel module and the at least one clean scrubbing liquid outlet of the scrubbing liquid pro-cessing module are in flow connection with each other for feeding the clean scrubbing liquid into the scrubber vessel, and the at least one used scrubbing liquid outlet of the scrubber vessel module and the at least one used scrubbing liquid inlet of the scrubbing liquid processing module are in flow connection with each other for leading used scrubbing liquid from the scrubber vessel to the scrubbing liquid processing module. Further, the scrubbing liquid processing module comprises a first support framework and the scrubber vessel module comprises a second support framework, and the scrubber vessel module is assembled onto the scrubbing liquid processing module such that the second support framework is supported by the first support framework.

This provides an exhaust gas scrubber which can be advantageously utilized in a marine vessel due to its modularized construction.

According to an embodiment of the invention the scrubbing liquid processing module comprises an open loop scrubbing liquid processing equipment comprising a direct flow connection between the at least one clean scrubbing liquid inlet and the at least one clean scrubbing liquid outlet, and the scrubbing liquid processing module comprises a residence tank arranged in flow communication with the at least one used scrubbing liquid inlet and the at least one used scrubbing liquid outlet.

According to an embodiment of the invention the scrubbing liquid processing module comprises an open loop scrubbing liquid processing equipment comprising a direct flow connection between the at least one clean scrubbing liquid inlet and the at least one clean scrubbing liquid outlet, and the scrubbing liquid processing module comprises a residence tank arranged in flow communication with the at least one used scrubbing liquid inlet and the at least one used scrubbing liquid outlet.

According to an embodiment of the invention the scrubbing liquid processing module comprises a closed loop scrubbing liquid processing equipment comprising a buffer tank and a direct flow connection between the at least one used scrubbing liquid inlet and the buffer tank, and a direct flow connection between the buffer tank and the at least one clean scrubbing liquid outlet.

According to an embodiment of the invention the scrubbing liquid processing module comprises an open loop scrubbing liquid processing equipment comprising a direct flow connection between the at least one clean scrubbing liquid inlet and the at least one clean scrubbing liquid outlet, and the scrubbing liquid processing module comprises a residence tank arranged in flow communication with the at least one used scrubbing liquid inlet and the at least one used scrubbing liquid outlet, and further a space reservation for a closed loop scrubbing liquid processing equipment in the module.

According to an embodiment of the invention the scrubbing liquid processing module comprises an open loop scrubbing liquid processing equipment comprising a direct flow connection between the at least one clean scrubbing liquid inlet and the at least one clean scrubbing liquid outlet, and the scrubbing liquid processing module comprises a residence tank arranged in flow communication with the at least one used scrubbing liquid inlet and the at least one used scrubbing liquid outlet, and further the scrubbing liquid processing module comprises a closed loop scrubbing liquid processing equipment comprising a buffer tank and a direct flow connection between the at least one used scrubbing liquid inlet and the buffer tank, and a direct flow connection between the buffer tank and the at least one clean scrubbing liquid outlet.

According to an embodiment of the invention the scrubber vessel module is comprised of a first section of the scrubber vessel module and a second section of the scrubber vessel module. This way the installation of a large scale scrubber vessel can be split into two stages.

According to an embodiment of the invention the first support framework is provided with a set of first connector parts at its top part and the second support framework is provided with a set of second connector parts at its bottom part, and that the set of the first connector parts are compatible with the set of the second connector parts to lock the scrubber vessel module onto the scrubbing liquid processing module by releasable connection between the set of the first connector parts and the set of the second connector parts.

According to an embodiment of the invention the first support framework is provided with a set of connector parts compatible for connection to a set of connector parts arranged to a base in a marine vessel where the exhaust gas scrubber system has been installed.

According to an embodiment of the invention the set of connector parts are compatible with the international standard ISO 1161:1984 to attach the exhaust gas scrubber system to its compatible base in the marine vessel.

According to an embodiment of the invention the scrubbing liquid processing module and the scrubber vessel module has an equal footprint area measured as the product of outermost length and width dimensions thereof. Advantageously the scrubbing liquid processing module and the scrubber vessel module has a footprint area which is a multiple of a footprint area of any intermodal container according to the international standard ISO 668:2013.

The scrubbing liquid processing module has advantageously a form of rectangular prism and it has a top face through which flow communication between the scrubbing liquid processing module and the scrubber vessel module is arranged to take place, and correspondingly the scrubber vessel module has a form of rectangular prism and it has a bottom face through which flow communication between the scrubbing liquid processing module and the scrubber vessel module is arranged to take place, and that the flow communication comprises a clean scrubbing liquid pipe and a used scrubbing liquid pipe.

According to an embodiment of the invention the at least one clean scrubbing liquid inlet of the scrubbing liquid processing module is arranged connectable to a source of sea water in the vessel, and that the at least one used scrubbing liquid outlet of the scrubbing liquid processing module is arranged connectable to a sea water discharge in the vessel.

An exhaust gas scrubber system - marine vessel combination comprising an exhaust gas scrubber system according to anyone of the appended claims wherein the marine vessel is provided with a base which is provided with connector parts for one or more intermodal containers made compatible with the international standard ISO 1161:1984 and the exhaust gas scrubber system is attached to the base by means of the connector parts.

Method of installing an exhaust gas scrubber system to a power plant in a marine vessel, the method comprising
providing an exhaust gas scrubber system comprising a scrubber vessel module and a scrubbing liquid processing module,
attaching the scrubbing liquid processing module on a deck of the marine vessel, laying the scrubber vessel module on the scrubbing liquid processing module and attaching the modules with each other,
fluidly connecting the scrubbing liquid processing module to vessel accessory, and fluidly connecting the scrubber vessel module to the scrubbing liquid processing module and to a flue of the vessel.

The method according to an embodiment of the invention is further developed by attaching the scrubbing liquid processing module by a support framework to a base on of the marine vessel by means of connector parts arranged to the support framework and by means of connector counter parts arranged to the base of the vessel, the connector counter parts being compatible with the connector parts arranged to the support framework.

The method according to an embodiment of the invention is further developed by attaching the scrubbing liquid processing module on a main deck of the marine vessel.

The method according to an embodiment of the invention is further developed by attaching the scrubbing liquid processing module on a deck of the marine vessel above a machine room of the vessel.

The method according to an embodiment of the invention is further developed by attaching the scrubbing liquid processing module by a support framework to a base in the marine vessel by means of connector parts made compatible with the international standard ISO 1161:1984 arranged to the support framework and by means of connector counter parts made compatible with the international standard ISO 1161:1984 arranged to the base of the vessel.

The method according to an embodiment of the invention is further developed by
(a) during the vessel is not underway
   hauling the scrubbing liquid processing module to the vessel and attaching the scrubbing liquid processing module to the base in the marine vessel;
(b) using the vessel underway after the step (a),
(c) mooring the vessel after the step (b) and during the vessel in not underway, and
hauling the scrubber vessel module to the vessel, and laying the scrubber vessel module on the scrubbing liquid processing module, and attaching the scrubber module to the scrubbing liquid processing module and/or the vessel.

The method according to an embodiment of the invention is further developed by
(a) during the vessel is not underway
   hauling the scrubbing liquid processing module to the vessel and attaching the scrubbing liquid processing module to the base in the marine vessel;
(b) during the vessel is underway
   fluidly connecting the scrubbing liquid processing module to the vessel's accessories;
(c) during the vessel in not underway
   hauling the scrubber vessel module to the vessel, and laying the scrubber vessel module on the scrubbing liquid processing module, and attaching the scrubber module to the scrubbing liquid processing module;
(d) during the vessel is underway
fluidly connecting the scrubber module to the scrubbing liquid processing module and to the vessel's flue;
performing the steps in the order (a)-(b)-(c)-(d).

The method according to an embodiment of the invention is further developed by fluidly connecting the scrubbing liquid processing module the vessel's accessories comprises connecting an at least one clean scrubbing liquid inlet of the scrubbing liquid processing module to a source of sea water in the vessel, and connecting at least one used scrubbing liquid outlet of the scrubbing liquid pro-cessing module to a sea water return conduit in the vessel, and connecting the scrubbing liquid processing module to the scrubber module comprises connecting an at least one clean scrubbing liquid outlet of the scrubbing liquid processing module.

The term clean scrubbing liquid means here liquid suitable for feeding into the scrubber vessel of gas cleaning purposes or simply scrubbing liquid which is flowing towards the scrubber unit rather than from the scrubber unit and it may contain also impurities. The term used scrubbing liquid means generally scrubbing liquid which has been in direct contact with the exhaust gas and which has been collected in the scrubber unit and removed therefrom. In this connection the main deck of the vessel is the highest substantially complete deck extending the full length and width of the ship so constructed that it is possible to close securely all openings in the vessel. The main deck has no substantial overhead protection being open to the weather, this can also be referred to as a weather deck in a related literature. In a car ferry the main deck may also its parking deck provided that the vessel is not provided with a separate weather deck.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates an exhaust gas scrubber system according to an embodiment of the invention,
Figure 2 illustrates a scrubbing liquid processing module in a first operating state according to an embodiment of the invention,
Figure 3 illustrates a scrubbing liquid processing module in a second operating state according to an embodiment of the invention,
Figure 4 illustrates an exhaust gas scrubber system assembled in a marine vessel according to an embodiment of the invention and
Figure 5 illustrates an exhaust gas scrubber system according to another embodiment of the invention.

### Detailed Description of Drawings

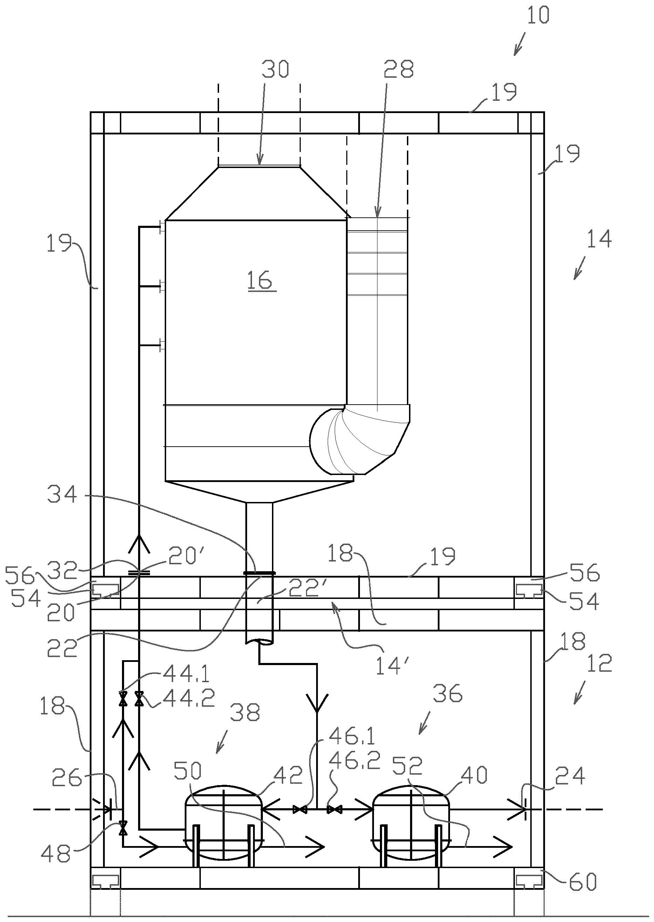

Figure 1 depicts schematically an exhaust gas scrubber system 10 configured for wet scrubbing of exhaust gas of a power plant in a marine vessel. The exhaust gas scrubber system 10 is particularly suitable for reducing sulphur oxide emissions of exhaust gas of an internal combustion piston engine e.g. when the engine is combusting fuel containing sulphur. The exhaust gas scrubber system is comprised of two or more modules 12, 14 which makes particularly the installation of the exhaust gas scrubber system into a marine vessel advantageous.

In the embodiment of the Figure 1 the exhaust gas scrubber system 10 comprises a scrubber vessel module 14 and a scrubbing liquid processing module 12. The scrubbing liquid processing module 12 comprises a first support framework 18 which is configured to bear also support forces required to support the scrubber vessel module 14 on the first support framework 18 when these are installed in a marine vessel. The first support framework 18 is constructed mainly of slender steel beams generally into a form of rectangular prism. The first support framework 18 is used for holding process equipment necessary or desired for handling of the scrubber liquid. Advantageously the scrubber liquid is based either on sea water or fresh water or a combination thereof, optionally added with chemicals suitable for desired emission reduction reactions.

The scrubbing liquid processing module 12 comprises fluid connections by means of which the scrubbing liquid can be brought into and removed from the scrubber system 10. The scrubbing liquid processing module 12 comprises a clean scrubbing liquid outlet 20 through which clean scrubbing liquid is fed to the scrubbing vessel module 14. Further, the scrubbing liquid processing module 12 comprises a used scrubbing liquid inlet 22 through which used scrubbing liquid can be received from the scrubber vessel module 14 to the scrubbing liquid processing module 12. The scrubbing liquid processing module 12 comprises also a used scrubbing liquid outlet 24 via which a main stream of the used scrubbing liquid can be transferred away from the scrubbing liquid processing module 12. Additionally, the scrubbing liquid processing module 12 comprises a clean scrubbing liquid inlet 26 via which the clean scrubbing liquid can be brought into the scrubbing liquid processing module 12.

Respectively, the scrubber vessel module 14 comprises fluid connections by means of which the scrubbing liquid can transferred between the scrubber vessel module 14 and the scrubbing liquid processing module 12 of the scrubber system 10. The scrubber vessel module 14 comprises a second support framework 19. The second support framework 19 also is constructed mainly of slender steel beams into a form of rectangular prism. The scrubbing vessel module 14, comprises exhaust gas inlet 28 and outlet 30 by means of which the exhaust gas can be fed into the scrubbing vessel module 14 and removed from the module 14 to the surrounding air or to a further processing of the exhaust gas. The scrubber vessel module 14 comprises a clean scrubbing liquid inlet 32 through which clean scrubbing liquid is fed from the scrubbing liquid processing module 12 to the scrubbing vessel module 14. Further, the scrubber vessel module 14 comprises a used scrubbing liquid outlet 34 through which used scrubbing liquid can be removed from the scrubber vessel module to the scrubbing liquid processing module 12.

The scrubber vessel module 14 comprises as its main component a scrubber vessel 16. The exhaust gas inlet 28 and outlet 30 are connected to the scrubber vessel 16 for introducing and withdrawing the exhaust gas into and from the scrubber vessel 16. The scrubbing liquid processing module 12 comprises components for processing or handling the scrubbing liquid by means of which clean scrubbing liquid is can be introduced to the scrubber vessel and used scrubbing liquid can be received from the scrubber vessel. Thus, the clean scrubbing liquid is introduced from the scrubbing liquid processing module 12 to the scrubber vessel module 14 and the used scrubbing liquid is returned from the scrubber vessel module 14 to the scrubbing liquid processing module 12. The scrubber vessel 16 is configured to subject the exhaust gas to direct contact with a scrubbing liquid in the scrubber vessel 16 for cleaning the exhaust gas in a manner known as such in the art of exhaust gas scrubbers. Exhaust gas enters the scrubber vessel and is sprayed with seawater. The sulphur oxide in the exhaust reacts with water and forms sulphuric acid. Chemicals may not be required since the natural alkalinity of seawater neutralises the acid.

When the scrubber vessel module 14 is installed on the scrubbing liquid processing module 12 so that the second support framework 19 rests on and is supported by the first support framework 18 at its intended position, the connecting inlets and outlets are aligned with each other such that they can be coupled with each other. This way the clean scrubbing liquid inlet 32 of the scrubber vessel module 14 and the clean scrubbing liquid outlet 20 of the scrubbing liquid processing module 12 are arranged in flow connection with each other for feeding the clean scrubbing liquid into the scrubber vessel, and the used scrubbing liquid outlet 34 of the scrubber vessel module 14 and the used scrubbing liquid inlet 22 of the scrubbing liquid processing module 12 are arranged in flow connection with each other for leading used scrubbing liquid from the scrubber vessel 16 to the scrubbing liquid processing module 12. The modules are prefabricated such that the laying of the scrubber vessel module 14 on the scrubbing liquid processing module 12 during the installation sets respective connecting part, such as flanges at right positions for easy coupling.

In the embodiment shown in the figure 1 the scrubbing liquid processing module 12 comprises an open loop scrubbing liquid processing equipment 36 and a closed loop scrubbing liquid processing equipment 38. The open loop means in practise that the exhaust gas scrubber system can be used in a once-through principal in respect to the scrubbing liquid, which is in this case the sea water. In the open loop operation the sea water is taken in, sprayed into the scrubber vessel 16 to treat the exhaust gas and eventually, after desired cleaning, discharged back to the sea. The closed loop means that the scrubber system has scrubbing liquid re-circulation system into which only make-up liquid and desired chemicals may be added to compensate an amount of scrubbing liquid removed from the circulation. In the closed loop system the scrubbing liquid may be based on the sea water, fresh water or a combination thereof.

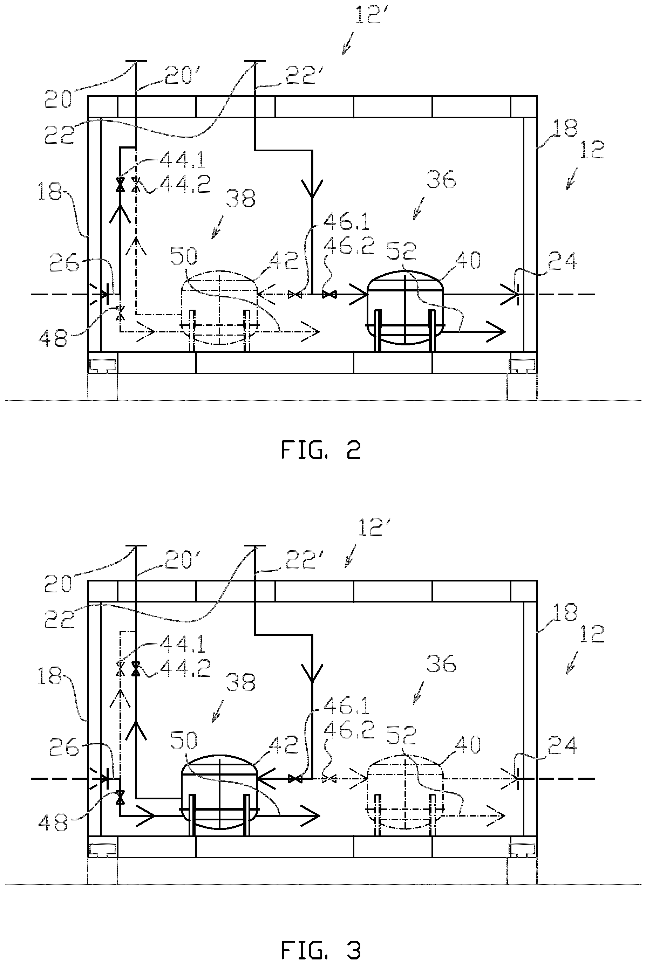

In the figure 2 there is shown the scrubbing liquid processing module 12 of the figure 1 where the open loop scrubbing liquid processing equipment 36 is in operating state. In the figure 2 the closed loop scrubbing liquid processing equipment 38 is in turn shown in non-operating state. The state is indicated such that a solid line means operating state and dash dot line means non-operating state.

The open loop scrubbing liquid processing equipment 36 in the scrubbing liquid processing module 12 comprises substantially direct flow connection between the at least one clean scrubbing liquid inlet 26 and the at least one clean scrubbing liquid outlet 20. Direct flow connection means that there is no substantial accumulation space between said inlet 26 and outlet 20 so that the amount or rate of fluid entered into the scrubbing liquid inlet 26 corresponds to the amount or rate of fluid exited from the outlet 20. Further, the open loop scrubbing liquid processing equipment 36 in the scrubbing liquid processing module 12 comprises flow connection between the at least one used scrubbing liquid inlet 22 and the at least one used scrubbing liquid outlet 24. Additionally there is a residence tank 40 arranged in flow communication between with the used scrubbing liquid inlet 22 and the used scrubbing liquid outlet 24 of the module 12. The residence tank is used for treating the used scrubbing liquid, comprising at least partial cleaning of the water, such that it can be eventually discharged to the water.

The scrubbing liquid processing module 12 has a form of rectangular prism and it has a top face 12' through which flow communication between the scrubbing liquid processing module 12 and the scrubber vessel module 14 is arranged to take place, and correspondingly the scrubber vessel module 14 has a form of rectangular prism and it has a bottom face 14' through which flow communication between the scrubbing liquid processing module 12 and the scrubber vessel module 14 is arranged to take place. The flow communication comprises the clean scrubbing liquid pipe 20' and a used scrubbing liquid pipe 22'.

In the figure 3 there is shown the scrubbing liquid processing module 12 where the closed loop scrubbing liquid processing equipment 38 is in operating state and the open loop scrubbing liquid processing equipment 36 is in non-operating state. The closed loop scrubbing liquid processing equipment 38 in the scrubbing liquid processing module 12 comprises a buffer tank 42. The buffer tank 42 is arranged in substantially direct flow connection with the at least one clean scrubbing liquid outlet 20 for feeding clean scrubbing liquid from the buffer tank 42 to the scrubber vessel 16 in the scrubbing vessel module 12. The buffer tank 42 is also arranged in substantially direct flow connection with the at least one used scrubbing liquid inlet 22 for receiving used scrubbing liquid from the scrubber vessel 16 to the buffer tank 42. The buffer tank 42 is used for removing impurities from the scrubbing liquid.

The at least one clean scrubbing liquid outlet 20 and at least one used scrubbing liquid inlet 22 are common to the open loop scrubbing liquid processing equipment 36 and the closed loop scrubbing liquid processing equipment 38 in the scrubbing liquid processing module 12. The desired operational state is set by suitably opening or closing a valve 44.1 arranged to a piping between the clean scrubbing liquid outlet 20 and the clean scrubbing liquid inlet 26, a valve 44.2 arranged to a piping between the clean scrubbing liquid outlet 20 and the buffer tank 42, a valve 46.1 arranged to a piping between the used scrubbing liquid inlet 22 and the buffer tank 42 and a valve 46.2 arranged to a piping between the used scrubbing liquid inlet 22 and the residence tank 40.

In the closed loop operating state the clean scrubbing liquid inlet 26 is in flow connection with the buffer tank 42 for leading make-up liquid into the liquid circulation. The piping between the clean scrubbing liquid inlet 26 is in flow connection with the buffer tank 42 is provided with a valve 48 to control the flow of make-up liquid.

The buffer tank 42 is provided with an outlet 50 for a discharge flow of scrubbing liquid effluent. Respectively the residence tank 40 is provided with an outlet 52 for a discharge flow of scrubbing liquid effluent.

It is conceivable in the scope of the invention that the scrubbing liquid processing module 12 comprises only the closed loop scrubbing liquid processing equipment 38 or only the closed loop scrubbing liquid processing equipment 36. However, advantageously the scrubbing liquid processing module 12 comprises both the closed loop scrubbing liquid processing equipment 38 and the closed loop scrubbing liquid processing equipment 36. In case the scrubbing liquid processing module 12 comprises only the closed loop scrubbing liquid processing equipment 38 or only the closed loop scrubbing liquid processing equipment 36, there is a space reservation for the omitted processing equipment in the scrubbing liquid processing module 12.

Now turning back to the figure 1 one can see that the scrubber vessel module 14 is installed above the scrubbing liquid processing module 12. According to an embodiment of the invention the first support framework 18 is provided with a set of first connector parts 54 at its top part. The second support framework 19 is provided with a set of second connector parts 56 at its bottom part. The set of the first connector parts 54 are compatible with the set of the second connector parts 56 to lock the scrubber vessel module 14 onto the scrubbing liquid processing module 12 by releasable connection between the set of the first connector parts 54 and the set of the second connector parts 56. The connector parts between the modules provide easy coupling of the first support framework 18 to the second support framework 19 and simultaneous aligning the frameworks horizontally with each other for at least for speeding up the installation work. The connector parts 54, 56 can be utilized in mere aligning the second framework 19 onto the first framework 18 wherein the final mechanical attachment of the frameworks with each other is made by other suitable means, such as welding.

According to an embodiment of the invention the first support framework 18 and the second support framework 19 are provided with a set of connector parts at its corners, which are compatible with the international standard ISO 1161:1984 to attach the exhaust gas scrubber system to its compatible base in the marine vessel. By means of the connector parts the first support framework 18 and the second support framework 19 can be connected with each other and to the container vessel in a straightforward manner.

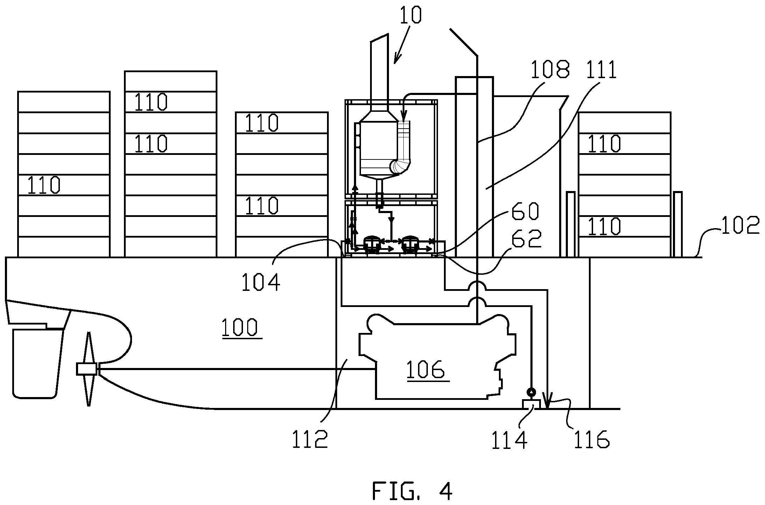

In the figure 4 there is shown the exhaust gas scrubber system 10 according to the figure 1 assembled in a marine vessel 100. More particularly the scrubber system is on a main deck 102 of the vessel. The vessel is provided with an engine106 in its engine room 112 and an exhaust flue 108 into which the exhaust gas inlet 28 is connected. The engine can also be referred to as a power plant because the vessel is usually provided with several engines. As can be seen in the figure 4 the exhaust gas scrubber system 10 is assembled on the main deck 102 directly above the engine room 112. This way connecting a prefabricated exhaust gas scrubber can be connected to the sea water systems of the vessel and exhaust gas flue 108 in straightforward manner. The vessel is provided with a sea chest 114 i.e. a source of sea water, which is fluidly connected to the clean scrubbing liquid inlet 26 of the scrubbing liquid processing module 12. Respectively the used scrubbing liquid outlet 24 is fluidly connected to a sea water discharge 116 via a sea water return conduit arranged to the vessel 100.

The scrubber system 10 is particularly intended for use in a container ship which is configured to transport goods stored in intermodal containers 110, which can be stacked into the vessel as is shown in the figure 4. An intermodal container is a large standardized shipping container, designed and built for intermodal freight transport, meaning these containers can be used across different modes of transport - from ship to rail to truck - without unloading and reloading their cargo. These containers are known under a number of names, such as simply container, cargo or freight container, ISO container, shipping, sea or ocean container, container van or (Conex) box, sea or c can. Fixing of container to its support can be assisted at least during the installation by making use of a special connector parts arranged at each one of the corners of a container. The connector part is defined in the international standard ISO 1161:2016.

The scrubbing liquid processing module 12 and the scrubber vessel module 14 have an equal footprint area measured as the product of outermost length and width dimensions thereof. This way the utilization of the deck space on the main deck is as efficient as possible. When the footprint area of the scrubbing liquid processing module 12 and the scrubber vessel module 12 is a multiple of a footprint area of an intermodal container according to the international standard ISO 668:2013, the utilization of a deck area in a container vessel is as efficient as possible. Because the exhaust gas scrubber system 10 occupy a space which is equivalent to one or more intermodal containers according to the international standard ISO 668:2013, the loss of cargo capacity is minimized when the exhaust gas scrubber system 10 is assembled on the main deck of the container vessel 100.

According to an embodiment of the invention the first support framework 18 is provided with a set of connector parts 60 which are compatible for connection to a set of connector parts 62 arranged to a base 104 in a marine vessel. This way the connector part 62 arranged to a base in the marine vessel for attaching an intermodal container can be utilized in attachment of the first support framework onto the vessel's main deck 102. The set of connector parts are advantageously compatible with the international standard ISO 1161:1984 to attach the exhaust gas scrubber system to its compatible base in the marine vessel.

This constitutes an exhaust gas scrubber system - marine vessel combination according to an embodiment of the invention which comprises an exhaust gas scrubber system 10 according to the invention wherein the marine vessel is provided with a base 104 which is provided with connector parts for one or more intermodal containers made compatible with the international standard ISO 1161:1984 and the exhaust gas scrubber system 10 is attached to the base by means of the connector parts.

The exhaust gas scrubber system 10 according to the invention is installed onto a main deck 102 of a marine vessel such that first is provided an exhaust gas scrubber system 10 comprising a scrubber vessel module 14 and a scrubbing liquid processing module 12. Next, the scrubbing liquid processing module 12 is lifted and attached on the deck of the marine vessel. Advantageously the position is selected so that the scrubbing liquid processing module 12 is directly above the machine room 112 of the vessel. After the scrubbing liquid processing module 12 has been attached on the deck, the scrubber vessel module 14 is laid on the scrubbing liquid processing module 12 and the modules are attached with each other. Next the scrubbing liquid processing module 12 can be fluidly connected to vessel accessory. In practise this means that at least the clean scrubbing liquid inlet 26 is connected to the source of sea water and the used scrubbing liquid outlet 24 is connected to the vessel's sea water discharge. Also electric power supply and control system is connected to the exhaust gas scrubber system 10. Further the scrubber vessel module 14 is fluidly connected to the scrubbing liquid processing module 12 and to a flue 108 of the vessel 100.

Method of installing the exhaust gas scrubber system 10 to the main deck 102 is advantageously applied so that during the vessel is not underway, meaning that the vessel can be moored or docked, the scrubbing liquid processing module 12, which has been prefabricated to include at least the open loop scrubbing liquid processing equipment 36 into the first support framework 18, is hauled onto the vessel. The scrubbing liquid processing module 12 is then attached to the base 104 in the marine vessel 100. After the attaching the scrubbing liquid processing module 12 to the base 104, the vessel is departed and used normally underway. After using the vessel underway, the vessel is moored again in due course. Now, during the vessel is again not underway the scrubber vessel module 14 is hauled to the vessel 100, laid on the scrubbing liquid processing module 12, and attached to the scrubbing liquid processing module 12 and/or to the vessel 100.

When the scrubbing liquid processing module 12 and the scrubber vessel module 14 are hauled to the vessel at different mooring occasions a single mooring time is not substantially lengthened due to installation of either one of the modules, and thus the disturbance of the installation of the exhaust gas scrubber system 10 to the cargo transport efficiency of the vessel is minimized.

According to an embodiment of the invention after the scrubbing liquid processing module 12 has been attached to the vessel and only after the vessel has departed the scrubbing liquid processing module 12 is fluidly connected to the vessel while the vessel is underway. This shortens the single mooring time even more.

According to an embodiment of the invention after the scrubber vessel module 14 has been attached on the scrubbing liquid processing module 12 and only after the vessel has departed again the scrubber module 14 is fluidly connected to the vessel and to the scrubbing liquid processing module 12 only after the vessel has departed and the vessel is underway again. This shortens the single mooring time still more.

Fluidly connecting the scrubber system 10 to the vessel's accessories comprises connecting an at least one clean scrubbing liquid inlet 26 of the scrubbing liquid processing module 12 to a source of sea water 114 in the vessel, and connecting at least one used scrubbing liquid outlet 24 of the scrubbing liquid processing module 12 to a sea water return conduit 116 in the vessel, and further connecting the scrubbing liquid processing module 12 to the scrubber module 14 comprises connecting the at least one clean scrubbing liquid outlet 20 of the scrubbing liquid processing module 12 to the scrubber module 14 and connecting the used scrubbing liquid inlet of the scrubbing liquid processing module 12 to the scrubber module 14, as well as connecting the exhaust gas inlet 28 to the flue 108 of the vessel 100.

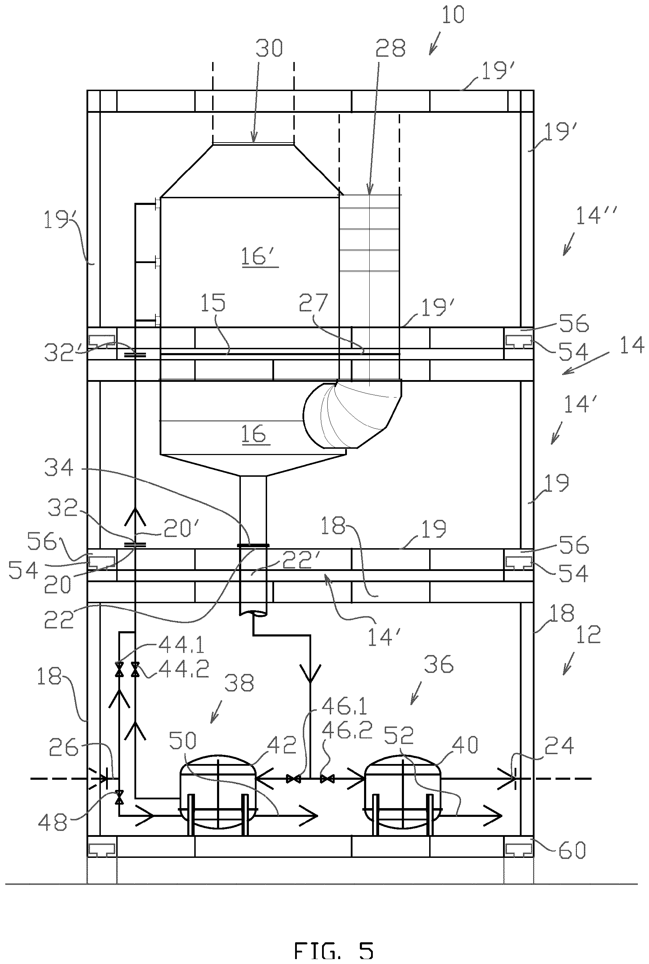

Figure 5 depicts schematically an exhaust gas scrubber system 10 configured for wet scrubbing of exhaust gas of a power plant in a marine vessel according to an embodiment of the invention. The exhaust gas scrubber system is comprised of two or more modules 12, 14 which makes particularly the installation of the exhaust gas scrubber system into a marine vessel advantageous.

The scrubber system shown in the figure 5 is substantially similar to that shown in the Figure 1 but in this embodiment the exhaust gas scrubber system 10 comprises two scrubber vessel module sections 14', 14" which form the scrubber vessel module 14. The section are laid one above the other. This way the scrubber vessel module 14 is comprised of several sections 14', 14". The embodiment of the Figure 5 is particularly advantageous for scrubbing exhaust gas having greater flow rate than in the embodiment shown in the Figure 1 since the scrubber unit 16 is comprised of two parts 16,16' which are supported by respective scrubber vessel module section 14',14". In the figure 5 the first section 14' of the scrubber vessel module 14 comprises a lower part of the scrubber unit 16 and the second section 14" of the scrubber vessel module 14 comprises an upper part of the scrubber unit 16'. Scrubber unit 16,16' comprises a joint 15 by means of which the lower part of the scrubber unit 16 and the upper part of the scrubber unit 16' are joined with each other after the second section 14" of the scrubber vessel module 14 has been positioned above the first section 14' of the scrubber vessel module 14, according to the invention. Respectively, the exhaust gas inlet 28 is provided a joint 27 by means of which the sections of the exhaust gas inlet 28 at first section 14' of the scrubber vessel module 14 and the second section 14" of the scrubber vessel module 14 are connectable with each other. The joints 15, 27 can be a welded or a flange joint. Between the first section 14' of the scrubber vessel module 14 and the second section 14" of the scrubber vessel module 14 the clean scrubbing liquid pipe 20' is provided a releasable connection 32', such as a flange connection. Also the second support framework 19 is comprised of a first section of the second support framework 19' and a second section of the second support framework 16. The second support framework i.e. both sections thereof, is also constructed mainly of slender steel beams into a form of rectangular prism as in the embodiments shown in the Figure 1.

The scrubber system 10 in the Figure 5 comprises one scrubbing liquid processing module 12, which is practically similar to that shown in and described with the reference to the Figure 1. The first support framework 18 of the processing module 12 is configured to bear the support forces required to support the first section 14' of the scrubber vessel module 14 and the second section 14" of the scrubber vessel module 14 on the first support framework 18 when these are installed in a marine vessel.

Also in the embodiment shown in the figure 5 the scrubbing liquid processing module 12 comprises an open loop scrubbing liquid processing equipment 36 and a closed loop scrubbing liquid processing equipment 38.

The exhaust gas scrubber system 10 according to the embodiment of the invention shown in the Figure 5 is installed onto a main deck of a marine vessel such that first is provided an exhaust gas scrubber system 10 comprising a first section 14" of the scrubber vessel module 14 and a second section 14" of the scrubber vessel module 14' and a scrubbing liquid processing module 12. Next, the scrubbing liquid processing module 12 is lifted and attached on the deck of the marine vessel 100. Advantageously the position is selected so that the scrubbing liquid processing module 12 is directly above the machine room 112 of the vessel and/next to an engine casing 111 of the vessel 100. After the scrubbing liquid processing module 12 has been attached on the deck, the first section 14' of the scrubber vessel module 14 is laid on the scrubbing liquid processing module 12 and the modules are attached with each other. Next the second section 14" of the scrubber vessel module 14 is laid on the first section of the scrubber vessel module 14 and the module sections 14', 14" are attached with each other. The first section 14' and the second section 14" also have a footprint area which is a multiple of a footprint area of any intermodal container according to the international standard ISO 668:2013.

Method of installing the exhaust gas scrubber system 10 to the main deck 102 is advantageously applied so that during the vessel is not underway, meaning that the vessel can be moored or docked, one of the modules or module sections, which has been prefabricated, is hauled onto the vessel. The hauled module is then attached to the base 104 in the marine vessel 100 or to a module previously installed to the vessel 100. After properly attaching said one of modules or module sections onto the vessel, it is departed and used normally underway. After using the vessel underway, the vessel is moored again in due course. Now, during the vessel is again not underway a second one of modules or module sections, which has been prefabricated, is hauled onto the vessel 100, laid on a module previously installed to the vessel 100 and attached thereto and/or to the vessel 100.When the scrubbing liquid processing module 12 and the sections of the scrubber vessel module 14 are hauled to the vessel at different mooring occasions, one at a time, a single mooring time is not substantially lengthened due to installation of either one of the modules or the sections, and thus the disturbance of the installation of the exhaust gas scrubber system 10 to the cargo transport efficiency of the vessel is minimized.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. Method of installing an exhaust gas scrubber system (10) of a power plant (106) in a marine vessel (100), the method comprising
providing an exhaust gas scrubber system (10) comprising a scrubber vessel module (14) and a scrubbing liquid processing module (12),
fluidly connecting the scrubbing liquid processing module (12) to marine vessel accessory,
fluidly connecting the scrubber vessel module (14) to the scrubbing liquid processing module (12) and to a flue of the marine vessel,
attaching the scrubbing liquid processing module (12) on a deck of the marine vessel (100),
**characterized by**
attaching the scrubbing liquid processing module (12) on a deck of the marine vessel (100) by a first support framework (18) of the scrubbing liquid processing module (12),
laying the scrubber vessel module (14) on the first support frame work (18) of the scrubbing liquid processing module (12) by means of a second support frame work (19) and attaching the modules (12, 14) with each other such that the second support framework (19) is supported by the first support framework (18), which first support framework (18) is configured to bear support forces required to support the scrubber vessel module (14) on the first support framework (18), and the first support framework (18) is provided with a set of first connector parts (54) at its top part and the second support framework (19) is provided with a set of second connector parts (56) at its bottom part, and the set of the first connector parts (54) are compatible with the set of the second connector parts (56) to lock the scrubber vessel module (14) onto the scrubbing liquid processing module (12) by releasable connection between the set of the first connector parts (54) and the set of the second connector parts (56).

2. Method of installing an exhaust gas scrubber system (10) to a power plant (106) in a marine vessel (100) according to claim 1, **characterized by** attaching the scrubbing liquid processing module (12) by a support framework to a base of the marine vessel (100) by means of connector parts arranged to the support framework and by means of connector counter parts arranged to the base of the marine vessel, the connector counter parts being compatible with the connector parts arranged to the support framework.

3. Method of installing an exhaust gas scrubber system (10) of a power plant (106) in a marine vessel (100) according to claim 1, **characterized by** attaching the scrubbing liquid processing module (12) on a main deck of the marine vessel (100).

4. Method of installing an exhaust gas scrubber system (10) of a power plant (106) in a marine vessel (100) according to claim 2, **characterized by** attaching the scrubbing liquid processing module (12) by a support framework to a base in the marine vessel (100) by means of connector parts made compatible with the international standard ISO 1161:1984 arranged to the support framework and by means of connector counter parts made compatible with the international standard ISO 1161:1984 arranged to the base of the marine vessel.

5. Method of installing an exhaust gas scrubber system (10) of a power plant (106) in a marine vessel (100) according to claim 1, **characterized by**
(a) during the marine vessel is not underway
hauling the scrubbing liquid processing module (12) to the marine vessel and attaching the scrubbing liquid processing module (12) to the base in the marine vessel (100);
(b) using the marine vessel underway after the step (a),
(c) mooring the marine vessel after the step (b) and during the marine vessel in not underway
hauling the scrubber vessel module (14) to the marine vessel, and laying the scrubber vessel module (14) on the scrubbing liquid processing module (12), and attaching the scrubber module to the scrubbing liquid processing module (12) and/or the marine vessel.

6. Method of installing an exhaust gas scrubber system (10) of a power plant (106) in a marine vessel (100) according to claim 1, **characterized by**
(a) during the marine vessel is not underway
hauling the scrubbing liquid processing module (12) to the marine vessel and attaching the scrubbing liquid processing module (12) to the base in the marine vessel (100);
(b) during the marine vessel is underway
fluidly connecting the scrubbing liquid processing module (12) to the marine vessel's accessories;
(c) during the marine vessel in not underway
hauling the scrubber vessel module (14) to the marine vessel, and laying the scrubber vessel module (14) on the scrubbing liquid processing module (12), and attaching the scrubber module to the scrubbing liquid processing module (12);
(d) during the marine vessel is underway
fluidly connecting the scrubber module to the scrubbing liquid processing module (12) and to the marine vessel's flue;
wherein the steps are performed in the order (a)-(b)-(c)-(d).

7. Method of installing an exhaust gas scrubber system (10) of a power plant (106) in a marine vessel (100) according to claim 1, **characterized by**
fluidly connecting the scrubbing liquid processing module (12) the marine vessel's accessories comprises connecting an at least one clean scrubbing liquid inlet (26) of the scrubbing liquid processing module (12) to a source of sea water in the marine vessel, and connecting at least one used scrubbing liquid outlet (24) of the scrubbing liquid processing module (12) to a sea water return conduit in the marine vessel, and
connecting the scrubbing liquid processing module (12) to the scrubber module comprises connecting an at least one clean scrubbing liquid outlet (20) of the scrubbing liquid processing module (12).

8. An exhaust gas scrubber system (10) for wet scrubbing of exhaust gas of a power plant (106) in a marine vessel (100), the exhaust gas scrubber system (10) comprising
a scrubbing liquid processing module (12) configured to receive scrubbing liquid from a scrubber vessel (16) and to feed scrubbing liquid to the scrubber vessel (16),
a scrubber vessel module (14) comprising a scrubber vessel (16), configured to subject the exhaust gas to direct contact with a scrubbing liquid in the scrubber vessel (16), **characterized in that**
the scrubbing liquid processing module (12) comprises a first support framework (18) and the scrubber vessel module (14) comprises a second support framework (19), and the scrubber vessel module (14) is assembled onto the scrubbing liquid processing module (12) such that the second support framework (19) is supported by the first support framework (18), and that the first support framework (18) is provided with a set of first connector parts (54) at its top part and the second support framework (19) is provided with a set of second connector parts (56) at its bottom part, and that the set of the first connector parts (54) are compatible with the set of the second connector parts (56) to lock the scrubber vessel module (14) onto the scrubbing liquid pro-cessing module (12) by releasable connection between the set of the first connector parts (54) and the set of the second connector parts (56).

9. An exhaust gas scrubber system (10) according to claim 8, **characterized in that** the scrubbing liquid processing module (12) comprises at least one exhaust gas inlet (28), at least one exhaust gas outlet (30), at least one clean scrubbing liquid inlet (32), at least one used scrubbing liquid outlet (34), and being fluidly connected to a scrubber vessel (16), and that
the scrubbing liquid processing module (12) comprises at least one clean scrubbing liquid outlet (20), at least one used scrubbing liquid inlet (22), at least one used scrubbing liquid outlet (24), at least one clean scrubbing liquid inlet (26), and scrubbing liquid processing equipment (36,38),
and that the at least one clean scrubbing liquid inlet (32) of the scrubber vessel module (14) and the at least one clean scrubbing liquid outlet (26) of the scrubbing liquid processing module (12) are in flow connection with each other for feeding the clean scrubbing liquid into the scrubber vessel (16),
and that the at least one used scrubbing liquid outlet (34) of the scrubber vessel module (14) and the at least one used scrubbing liquid inlet (22) of the scrubbing liquid processing module (12) are in flow connection with each other for leading used scrubbing liquid from the scrubber vessel (16) to the scrubbing liquid processing module (12).

10. An exhaust gas scrubber system (10) according to claim 9, **characterized in that** the scrubbing liquid processing module (12) comprises an open loop scrubbing liquid processing equipment (36) comprising a direct flow connection between the at least one clean scrubbing liquid inlet (26) and the at least one clean scrubbing liquid outlet (20), and that the scrubbing liquid processing module (12) comprises a residence tank (40) arranged in flow communication with the at least one used scrubbing liquid inlet (22) and the at least one used scrubbing liquid outlet (24).

11. An exhaust gas scrubber system (10) according to claim 9, **characterized in that** the scrubbing liquid processing module (12) comprises a closed loop scrubbing liquid processing equipment (38) comprising a buffer tank (42) and a direct flow connection between the at least one used scrubbing liquid inlet (22) and the buffer tank (42), and a direct flow connection between the buffer tank (42) and the at least one clean scrubbing liquid outlet (20).

12. An exhaust gas scrubber system (10) for wet scrubbing of exhaust gas of a power plant (106) in a marine vessel (100) according to claim 9, **characterized in that** the first support framework (18) is provided with a set of connector parts compatible for connection to a set of connector parts arranged to a base in a marine vessel (100).

13. An exhaust gas scrubber system (10) for wet scrubbing of exhaust gas of a power plant (106) in a marine vessel (100) according to claim 12, **characterized in that** the set of connector parts are compatible with the international standard ISO 1161:1984 to attach the exhaust gas scrubber system (10) to its compatible base in the marine vessel (100).

14. An exhaust gas scrubber system (10) according to claim 8, **characterized in that** the scrubbing liquid processing module (12) and the scrubber vessel module (14) has an equal footprint area measured as the product of outermost length and width dimensions thereof.

15. An exhaust gas scrubber system (10) according to claim 8, **characterized in that** the scrubbing liquid processing module (12) and the scrubber vessel module (14) has an a footprint area measured as the product of outermost length and width dimensions thereof which is a multiple of a footprint area of any intermodal container according to the international standard ISO 668:2013.

## Patentansprüche

1. Verfahren zum Installieren eines Abgaswäschersystems (10) eines Kraftwerks (106) in einem Seeschiff (100), wobei das Verfahren umfasst:
Bereitstellen eines Abgaswäschersystems (10), das ein Wäscherbehältermodul (14) und ein Waschflüssigkeitsverarbeitungsmodul (12) umfasst,
Fließverbinden des Waschflüssigkeitsverarbeitungsmoduls (12) mit Zubehör des Seeschiffes,
Fließverbinden des Wäscherbehältermoduls (14) mit dem Waschflüssigkeitsverarbeitungsmodul (12) und mit einem Rauchabzug des Seeschiffes,
Befestigen des Waschflüssigkeitsverarbeitungsmoduls (12) auf einem Deck des Seeschiffes (100),
**gekennzeichnet durch**
Befestigen des Waschflüssigkeitsverarbeitungsmoduls (12) auf einem Deck des Seeschiffes (100) über eine erste Tragrahmenkonstruktion (18) des Waschflüssigkeitsverarbeitungsmoduls (12),
Auflegen des Wäscherbehältermoduls (14) auf die erste Tragrahmenkonstruktion (18) des Waschflüssigkeitsverarbeitungsmoduls (12) mithilfe einer zweiten Tragrahmenkonstruktion (19) und Befestigen der Module (12, 14) aneinander, so dass die zweite Tragrahmenkonstruktion (19) von der ersten Tragrahmenkonstruktion (18) getragen wird, wobei die erste Tragrahmenkonstruktion (18) dazu ausgestaltet ist, Tragkräfte auszuhalten, die erforderlich sind, um das Wäscherbehältermodul (14) auf der ersten Tragrahmenkonstruktion (18) zu tragen, und die erste Tragrahmenkonstruktion (18) an ihrem oberen Teil mit einem Satz erster Verbindungsstücke (54) versehen ist und die zweite Tragrahmenkonstruktion (19) an ihrem unteren Teil mit einem Satz zweiter Verbindungsstücke (56) versehen ist und der Satz der ersten Verbindungsstücke (54) mit dem Satz der zweiten Verbindungsstücke (56) kompatibel ist, um das Wäscherbehältermodul (14) über eine lösbare Verbindung zwischen dem Satz der ersten Verbindungsstücke (54) und dem Satz der zweiten Verbindungsstücke (56) auf dem Waschflüssigkeitsverarbeitungsmodul (12) zu arretieren.

2. Verfahren zum Installieren eines Abgaswäschersystems (10) an einem Kraftwerk (106) in einem Seeschiff (100) nach Anspruch 1, **gekennzeichnet durch** Befestigen des Waschflüssigkeitsverarbeitungsmoduls (12) über eine Tragrahmenkonstruktion an einer Basis des Seeschiffes (100) mithilfe von Verbindungsstücken, die an der Tragrahmenkonstruktion angeordnet sind, und mithilfe von Verbindungsgegenstücken, die an der Basis des Seeschiffes angeordnet sind, wobei die Verbindungsgegenstücke mit den Verbindungsstücken, die an der Tragrahmenkonstruktion angeordnet sind, kompatibel sind.

3. Verfahren zum Installieren eines Abgaswäschersystems (10) eines Kraftwerks (106) in einem Seeschiff (100) nach Anspruch 1, **gekennzeichnet durch** Befestigen des Waschflüssigkeitsverarbeitungsmoduls (12) auf einem Hauptdeck des Seeschiffes (100).

4. Verfahren zum Installieren eines Abgaswäschersystems (10) eines Kraftwerks (106) in einem Seeschiff (100) nach Anspruch 2, **gekennzeichnet durch** Befestigen des Waschflüssigkeitsverarbeitungsmoduls (12) über eine Tragrahmenkonstruktion an einer Basis in dem Seeschiff (100) mithilfe von Verbindungsstücken, die kompatibel mit der internationalen Norm ISO 1161:1984 hergestellt und an der Tragrahmenkonstruktion angeordnet sind, und mithilfe von Verbindungsgegenstücken, die kompatibel mit der internationalen Norm ISO 1161:1984 hergestellt und an der Basis des Seeschiffes angeordnet sind.

5. Verfahren zum Installieren eines Abgaswäschersystems (10) eines Kraftwerks (106) in einem Seeschiff (100) nach Anspruch 1, **gekennzeichnet durch**
(a) während das Seeschiff nicht unterwegs ist Befördern des Waschflüssigkeitsverarbeitungsmoduls (12) auf das Seeschiff und Befestigen des Waschflüssigkeitsverarbeitungsmoduls (12) an der Basis in dem Seeschiff (100);
(b) Benutzen des Seeschiffes unterwegs nach Schritt (a),
(c) Vertäuen des Seeschiffes nach Schritt (b) und während das Seeschiff nicht unterwegs ist Befördern des Wäscherbehältermoduls (14) auf das Seeschiff und Auflegen des Wäscherbehältermoduls (14) auf das Waschflüssigkeitsverarbeitungsmodul (12) und Befestigen des Wäschermoduls an dem Waschflüssigkeitsverarbeitungsmodul (12) und/oder dem Seeschiff.

6. Verfahren zum Installieren eines Abgaswäschersystems (10) eines Kraftwerks (106) in einem Seeschiff (100) nach Anspruch 1, **gekennzeichnet durch**
(a) während das Seeschiff nicht unterwegs ist Befördern des Waschflüssigkeitsverarbeitungsmoduls (12) auf das Seeschiff und Befestigen des Waschflüssigkeitsverarbeitungsmoduls (12) an der Basis in dem Seeschiff (100);
(b) während das Seeschiff unterwegs ist Fließverbinden des Waschflüssigkeitsverarbeitungsmoduls (12) mit dem Zubehör des Seeschiffes;
(c) während das Seeschiff nicht unterwegs ist Befördern des Wäscherbehältermoduls (14) auf das Seeschiff und Auflegen des Wäscherbehältermoduls (14) auf das Waschflüssigkeitsverarbeitungsmodul (12) und Befestigen des Wäschermoduls an dem Waschflüssigkeitsverarbeitungsmodul (12);
(d) während das Seeschiff unterwegs ist Fließverbinden des Wäschermoduls mit dem Waschflüssigkeitsverarbeitungsmodul (12) und mit dem Rauchabzug des Seeschiffes;
wobei die Schritte in der Reihenfolge (a)-(b)-(c)-(d) ausgeführt werden.

7. Verfahren zum Installieren eines Abgaswäschersystems (10) eines Kraftwerks (106) in einem Seeschiff (100) nach Anspruch 1, **gekennzeichnet dadurch, dass**
das Fließverbinden des Waschflüssigkeitsverarbeitungsmoduls (12) mit dem Zubehör des Seeschiffes ein Verbinden wenigstens eines Einlasses für reine Waschflüssigkeit (26) des Waschflüssigkeitsverarbeitungsmoduls (12) mit einer Seewasserquelle in dem Seeschiff und ein Verbinden wenigstens eines Auslasses für benutzte Waschflüssigkeit (24) des Waschflüssigkeitsverarbeitungsmoduls (12) mit einer Seewasserrückführleitung in dem Seeschiff umfasst und das Verbinden des Waschflüssigkeitsverarbeitungsmoduls (12) mit dem Wäschermodul ein Verbinden wenigstens eines Auslasses für reine Waschflüssigkeit (20) des Waschflüssigkeitsverarbeitungsmoduls (12) umfasst.

8. Abgaswäschersystem (10) zum Nasswaschen von Abgas eines Kraftwerks (106) in einem Seeschiff (100), wobei das Abgaswäschersystem (10) umfasst:
ein Waschflüssigkeitsverarbeitungsmodul (12), das dazu ausgestaltet ist, Waschflüssigkeit von einem Wäscherbehälter (16) zu empfangen und dem Wäscherbehälter (16) Waschflüssigkeit zuzuführen,
ein Wäscherbehältermodul (14), das einen Wäscherbehälter (16) umfasst, der dazu ausgestaltet ist, das Abgas in dem Wäscherbehälter (16) einem direkten Kontakt mit einer Waschflüssigkeit zu unterziehen, **dadurch gekennzeichnet, dass**
das Waschflüssigkeitsverarbeitungsmodul (12) eine erste Tragrahmenkonstruktion (18) umfasst und das Wäscherbehältermodul (14) eine zweite Tragrahmenkonstruktion (19) umfasst und das Wäscherbehältermodul (14) derart auf dem Waschflüssigkeitsverarbeitungsmodul (12) befestigt ist, dass die zweite Tragrahmenkonstruktion (19) von der ersten Tragrahmenkonstruktion (18) getragen wird, und dass die erste Tragrahmenkonstruktion (18) an ihrem oberen Teil mit einem Satz erster Verbindungsstücke (54) versehen ist und die zweite Tragrahmenkonstruktion (19) an ihrem unteren Teil mit einem Satz zweiter Verbindungsstücke (56) versehen ist und dass der Satz der ersten Verbindungsstücke (54) mit dem Satz der zweiten Verbindungsstücke (56) kompatibel ist, um das Wäscherbehältermodul (14) über eine lösbare Verbindung zwischen dem Satz der ersten Verbindungsstücke (54) und dem Satz der zweiten Verbindungsstücke (56) auf dem Waschflüssigkeitsverarbeitungsmodul (12) zu arretieren.

9. Abgaswäschersystem (10) nach Anspruch 8, **dadurch gekennzeichnet, dass** das Waschflüssigkeitsverarbeitungsmodul (12) wenigstens einen Abgaseinlass (28), wenigstens einen Abgasauslass (30), wenigstens einen Einlass für reine Waschflüssigkeit (32) und wenigstens einen Auslass für benutzte Waschflüssigkeit (34) umfasst und mit einem Wäscherbehälter (16) fließverbunden ist und dass
das Waschflüssigkeitsverarbeitungsmodul (12) wenigstens einen Auslass für reine Waschflüssigkeit (20), wenigstens einen Einlass für benutzte Waschflüssigkeit (22), wenigstens einen Auslass für benutzte Waschflüssigkeit (24), wenigstens einen Einlass für reine Waschflüssigkeit (26) und eine Waschflüssigkeitsverarbeitungseinrichtung (36, 38) umfasst,
und dass der wenigstens eine Einlass für reine Waschflüssigkeit (32) des Wäscherbehältermoduls (14) und der wenigstens eine Auslass für reine Waschflüssigkeit (26) des Waschflüssigkeitsverarbeitungsmoduls (12) zwecks Zuführens der reinen Waschflüssigkeit in den Wäscherbehälter (16) in Fließverbindung miteinander stehen,
und dass der wenigstens eine Auslass für benutzte Waschflüssigkeit (34) des Wäscherbehältermoduls (14) und der wenigstens eine Einlass für benutzte Waschflüssigkeit (22) des Waschflüssigkeitsverarbeitungsmoduls (12) zwecks Leitens benutzter Waschflüssigkeit von dem Wäscherbehälter (16) zu dem Waschflüssigkeitsverarbeitungsmodul (12) in Fließverbindung miteinander stehen.

10. Abgaswäschersystem (10) nach Anspruch 9, **dadurch gekennzeichnet, dass** das Waschflüssigkeitsverarbeitungsmodul (12) eine Waschflüssigkeitsverarbeitungseinrichtung (36) mit offenem Regelkreis umfasst, die eine direkte Fließverbindung zwischen dem wenigstens einen Einlass für reine Waschflüssigkeit (26) und dem wenigstens einen Auslass für reine Waschflüssigkeit (20) umfasst, und dass das Waschflüssigkeitsverarbeitungsmodul (12) einen Verweiltank (40) umfasst, der in Fließverbindung mit dem wenigstens einen Einlass für benutzte Waschflüssigkeit (22) und dem wenigstens einen Auslass für benutzte Waschflüssigkeit (24) steht.

11. Abgaswäschersystem (10) nach Anspruch 9, **dadurch gekennzeichnet, dass** das Waschflüssigkeitsverarbeitungsmodul (12) eine Waschflüssigkeitsverarbeitungseinrichtung (38) mit geschlossenem Regelkreis umfasst, die einen Puffertank (42) und eine direkte Fließverbindung zwischen dem wenigstens einen Einlass für benutzte Waschflüssigkeit (22) und dem Puffertank (42) und eine direkte Fließverbindung zwischen dem Puffertank (42) und dem wenigstens einen Auslass für reine Waschflüssigkeit (20) umfasst.

12. Abgaswäschersystem (10) zum Nasswaschen von Abgas eines Kraftwerks (106) in einem Seeschiff (100) nach Anspruch 9, **dadurch gekennzeichnet, dass** die erste Tragrahmenkonstruktion (18) mit einem Satz von Verbindungsstücken versehen ist, die zur Verbindung mit einem Satz von Verbindungsstücken, die an einer Basis in einem Seeschiff (100) angeordnet sind, kompatibel sind.

13. Abgaswäschersystem (10) zum Nasswaschen von Abgas eines Kraftwerks (106) in einem Seeschiff (100) nach Anspruch 12, **dadurch gekennzeichnet, dass** der Satz von Verbindungsstücken mit der internationalen Norm ISO 1161:1984 kompatibel ist, um das Abgaswäschersystem (10) an seiner kompatiblen Basis in dem Seeschiff (100) zu befestigen.

14. Abgaswäschersystem (10) nach Anspruch 8, **dadurch gekennzeichnet, dass** das Waschflüssigkeitsverarbeitungsmodul (12) und das Wäscherbehältermodul (14) eine gleiche Grundfläche aufweisen, gemessen als das Produkt der äußersten Längen- und Breitenabmessungen derselben.

15. Abgaswäschersystems (10) nach Anspruch 8, **dadurch gekennzeichnet, dass** das Waschflüssigkeitsverarbeitungsmodul (12) und das Wäscherbehältermodul (14) eine Grundfläche, gemessen als das Produkt der äußersten Längen- und Breitenabmessungen derselben, aufweisen, die ein Vielfaches einer Grundfläche eines beliebigen Intermodal-Containers gemäß der internationalen Norm ISO 668:2013 ist.

## Revendications

1. Procédé d'installation d'un système d'épuration de gaz d'échappement (10) d'une centrale électrique (106) dans un navire (100), ce procédé comprenant
la prévision d'un système d'épuration de gaz d'échappement (10) comprenant un module de cuve d'épuration (14) et un module de traitement de liquide d'épuration (12),
la connexion fluidique du module de traitement de liquide d'épuration (12) à un accessoire de navire,
la connexion fluidique du module de cuve d'épuration (14) au module de traitement de liquide d'épuration (12) et à un conduit de navire,
la fixation du module de traitement de liquide d'épuration (12) sur un pont du navire (100),
**caractérisé par**
la fixation du module de traitement de liquide d'épuration (12) sur un pont du navire (100) par une première structure support (18) du module de traitement de liquide d'épuration (12),
la pose du module de cuve d'épuration (14) sur la première structure support (18) du module de traitement de liquide d'épuration (12) au moyen d'une seconde structure support (19) et la fixation des modules (12, 14) les uns aux autres de manière à ce que la seconde structure support (19) soit supportée par la première structure support (18), laquelle première structure support (18) est conçue pour supporter des forces de support requises pour supporter le module de cuve d'épuration (14) sur la première structure support (18), et la première structure support (18) étant pourvue d'un ensemble de premières pièces de connexion (54) au niveau de sa partie supérieure et la seconde structure support (19) étant pourvue d'un ensemble de secondes pièces de connexion (56) à sa partie inférieure, et l'ensemble de premières pièces de connexion (54) étant compatible avec l'ensemble de secondes pièces de connexion (56) pour verrouiller le module de cuve d'épuration (14) sur le module de traitement de liquide d'épuration (12) par connexion dissociable entre l'ensemble de premières pièces de connexion (54) et l'ensemble de secondes pièces de connexion (56).

2. Procédé d'installation d'un système d'épuration de gaz d'échappement (10) d'une centrale électrique (106) dans un navire (100) selon la revendication 1, **caractérisé par** la fixation du module de traitement de liquide d'épuration (12) par une structure support à une base du navire (100) au moyen de pièces de connexion disposées sur la structure support et au moyen de pièces de comptage de connecteurs disposées sur la base du navire, les pièces de comptage de connecteurs étant compatibles avec les pièces de connexion disposées sur la structure support.

3. Procédé d'installation d'un système d'épuration de gaz d'échappement (10) d'une centrale électrique (106) dans un navire (100) selon la revendication 1, **caractérisé par** la fixation du module de traitement de liquide d'épuration (12) sur un pont principal du navire (100).

4. Procédé d'installation d'un système d'épuration (10) d'une centrale électrique (106) dans un navire (100) selon la revendication 2, **caractérisé par** la fixation du module de traitement de liquide d'épuration (12) à une base du navire (100) au moyen de pièces de connexion rendues compatibles avec la norme internationale ISO 1161:1984 et disposées sur la structure support et au moyen de pièces de comptage de connecteurs rendues compatibles avec la norme internationale ISO 1161:1984 et disposées sur la base du navire.

5. Procédé d'installation d'un système d'épuration de gaz d'échappement (10) d'une centrale électrique (106) dans un navire (100) selon la revendication 1, **caractérisé par**,
(a) pendant que le navire ne navigue pas, le halage du module de traitement de liquide d'épuration (12) jusqu'au navire et la fixation du module de traitement de liquide d'épuration (12) à la base dans le navire (100) ;
(b) l'utilisation du navire en navigation après l'étape (a),
(c) l'amarrage du navire après l'étape (b) et pendant que le navire ne navigue pas, le halage du module de cuve d'épuration (14) jusqu'au navire, et pose du module de cuve d'épuration (14) sur le module de traitement de liquide d'épuration (12), et la fixation du module d'épuration au module de traitement de liquide d'épuration (12) et/ou au navire.

6. Procédé d'installation d'un système d'épuration de gaz d'échappement (10) d'une centrale électrique (106) dans un navire (100) selon la revendication 1, **caractérisé par**,
(a) pendant que le navire ne navigue pas, le halage du module de traitement de liquide d'épuration (12) jusqu'au navire et la fixation du module de traitement de liquide d'épuration (12) à la base dans le navire (100) ;
(b) pendant que le navire navigue, la connexion fluidique du module de traitement de liquide d'épuration (12) aux accessoires du navire ;
(c) pendant que le navire ne navigue pas, le halage du module de cuve d'épuration (14) jusqu'au navire, et pose du module de cuve d'épuration (14) sur le module de traitement de liquide d'épuration (12), et la fixation du module d'épuration au module de traitement de liquide d'épuration (12) ;
(d) pendant que le navire navigue, la connexion fluidique du module de traitement de liquide d'épuration (12) et au conduit de navire ;
ces étapes étant réalisées dans l'ordre (a)-(b)-(c)-(d) .

7. Procédé d'installation d'un système d'épuration de gaz d'échappement (10) d'une centrale électrique (106) dans un navire (100) selon la revendication 1, **caractérisé par**
la connexion fluidique du module de traitement de liquide d'épuration (12), les accessoires du navire comprenant la connexion d'au moins une entrée de liquide d'épuration propre (26) du module de traitement de liquide d'épuration (12) à une source d'eau de mer dans le navire, et la connexion d'au moins une sortie de liquide d'épuration usagé (24) du module de traitement de liquide d'épuration (12) à une conduite de retour d'eau de mer dans le navire, et
la connexion du module de traitement de liquide d'épuration (12) au module d'épuration comprenant la connexion d'au moins une sortie de liquide d'épuration propre (20) du module de traitement de liquide d'épuration (12).

8. Système d'épuration de gaz d'échappement (10) pour l'épuration humide de gaz d'échappement d'une centrale électrique (106) dans un navire (100), le système d'épuration de gaz d'échappement (10) comprenant
un module de traitement de liquide d'épuration (12) conçu pour recevoir du liquide d'épuration en provenance d'un cuve d'épuration (16) et apporter du liquide d'épuration à la cuve d'épuration (16),
un module de cuve d'épuration (14) comprenant un cuve d'épuration (16) conçu pour soumettre le gaz d'échappement à un contact direct avec un liquide d'épuration dans la cuve d'épuration (16), **caractérisé en ce que**
le module de traitement de liquide d'épuration (12) comprend une première structure support (18) et le module de cuve d'épuration (14) comprend une seconde structure support (19), et le module de cuve d'épuration (14) est assemblé sur le module de traitement de liquide d'épuration (12) de manière à ce que la seconde structure support (19) soit supportée par la première structure support (18), et que la première structure support (18) soit pourvue d'un ensemble de premières pièces de connexion (54) à sa partie supérieure et que la seconde structure support (19) soit pourvue d'un ensemble de secondes pièces de connexion (56) à sa partie inférieure, et que l'ensemble de premières pièces de connexion (54) soit compatible avec l'ensemble de secondes pièces de connexion (56) pour verrouiller le module de cuve d'épuration (14) sur le module de traitement de liquide d'épuration (12) par connexion dissociable entre l'ensemble de premières pièces de connexion (54) et l'ensemble de secondes pièces de connexion (56).

9. Système d'épuration de gaz d'échappement (10) selon la revendication 8, **caractérisé en ce que** le module de traitement de liquide d'épuration (12) comprend au moins une entrée de gaz d'échappement (28), au moins une sortie de gaz d'échappement (30), au moins une entrée de liquide d'épuration propre (32), au moins une sortie de liquide d'épuration usagé (34), et est connecté au niveau fluidique à une cuve d'épuration (16), et que
le module de traitement de liquide d'épuration (12) comprend au moins une sortie de liquide d'épuration propre (20), au moins une entrée de liquide d'épuration usagé (22), au moins une sortie de liquide d'épuration usagé (24), au moins une entrée de liquide d'épuration propre (26), et un équipement de traitement de liquide d'épuration (36, 38),
et que l'au moins une entrée de liquide d'épuration propre (32) du module de cuve d'épuration (14) et l'au moins une sortie liquide d'épuration usagé (26) du module de traitement de liquide d'épuration (12) sont en connexion fluidique l'une avec l'autre pour apporter le liquide d'épuration propre dans la cuve d'épuration (16),
et que l'au moins une sortie de liquide d'épuration usagé (34) du module de cuve d'épuration (14) et l'au moins une entrée de liquide d'épuration usagé (22) du module de traitement liquide d'épuration (12) sont en connexion fluidique l'une avec l'autre pour apporter du liquide d'épuration usagé depuis la cuve d'épuration (16) jusqu'au module de traitement de liquide d'épuration (12).

10. Système d'épuration de gaz d'échappement (10) selon la revendication 9, **caractérisé en ce que** le module de traitement de liquide d'épuration (12) comprend un équipement de traitement de liquide d'épuration à boucle ouverte (36) comprenant une connexion fluidique directe entre l'au moins une entrée de liquide d'épuration propre (26) et l'au moins une sortie de liquide d'épuration usagé (20), et que le module de traitement de liquide d'épuration (12) comprend un réservoir stationnaire (40) disposé en connexion fluidique avec l'au moins une entrée de liquide d'épuration usagé (22) et l'au moins une sortie de liquide d'épuration usagé (24).

11. Système d'épuration de gaz d'échappement (10) selon la revendication 9, **caractérisé en ce que** le module de traitement de liquide d'épuration (12) comprend un équipement de traitement de liquide d'épuration à boucle fermée (38) comprenant un réservoir tampon (42) et une connexion fluidique directe entre l'au moins une entrée de liquide d'épuration usagé (22) et le réservoir tampon (42), et une connexion fluidique directe entre le réservoir tampon (42) et l'au moins une sortie de liquide d'épuration propre (20).

12. Système d'épuration de gaz d'échappement (10) pour l'épuration humide de gaz d'échappement d'une centrale électrique (106) dans un navire (100) selon la revendication 9, **caractérisé en ce que** la première structure support (18) est pourvue d'un ensemble de pièces de connexion compatible pour connexion à un ensemble de pièces de connexion disposées sur une base dans un navire (100).

13. Système d'épuration de gaz d'échappement (10) pour l'épuration humide de gaz d'échappement d'une centrale électrique (106) dans un navire (100) selon la revendication 12, **caractérisé en ce que** l'ensemble de pièces de connexion est compatible avec la norme internationale ISO 1161:1984 pour fixer le système d'épuration de gaz d'échappement (10) à sa base compatible dans le navire (100).

14. Système d'épuration de gaz d'échappement (10) selon la revendication 8, **caractérisé en ce que** le module de traitement de liquide épuration (12) et le module de cuve d'épuration (14) ont une superficie d'empreinte égale mesurée comme produit de ses dimensions de longueur et de largeur les plus à l'extérieur.

15. Système d'épuration de gaz d'échappement (10) selon la revendication 8, **caractérisé en ce que** le module de traitement de liquide d'épuration (12) et le module de cuve d'épuration (14) ont une superficie d'empreinte égale mesurée comme produit de ses dimensions de longueur et de largeur les plus à l'extérieur et qui est un multiple d'une superficie d'empreinte de tout conteneur intermodal selon la norme internationale ISO 668:2013.
